(19) **Europäisches Patentamt / European Patent Office / Office européen des brevets**

(11) **EP 4 215 796 B1**

(12) **EUROPEAN PATENT SPECIFICATION**

(45) Date of publication and mention
of the grant of the patent:
**30.04.2025 Bulletin 2025/18**

(21) Application number: **23153160.9**

(22) Date of filing: **24.01.2023**

(51) International Patent Classification (IPC):
***F17C 1/06*** *(2006.01)*

(52) Cooperative Patent Classification (CPC):
**F17C 1/06;** F17C 2201/0109; F17C 2201/056;
F17C 2203/0604; F17C 2203/0624;
F17C 2203/0636; F17C 2203/0648;
F17C 2203/0665; F17C 2203/067; F17C 2205/0326;
F17C 2205/0332; F17C 2209/2145;
F17C 2209/2163; F17C 2221/012; F17C 2221/033;
(Cont.)

(54) **A PRESSURE VESSEL FOR STORING FLUID**

DRUCKBEHÄLTER ZUR SPEICHERUNG VON FLÜSSIGKEIT

RÉCIPIENT SOUS PRESSION POUR STOCKER UN FLUIDE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **25.01.2022 IN 202221004254**

(43) Date of publication of application:
**26.07.2023 Bulletin 2023/30**

(73) Proprietor: **Indian Oil Corporation Limited
Mumbai 400 051 (IN)**

(72) Inventors:
• **SEMWAL, Kaladhar**
**121007 Faridabad, Haryana (IN)**
• **SHARMA, Pranjali**
**721302 West Bengal (IN)**
• **BERA, Tapan**
**121007 Faridabad, Haryana (IN)**
• **BADHE, Rajesh Muralidhar**
**121007 Faridabad, Haryana (IN)**
• **SHARMA, Alok**
**121007 Faridabad, Haryana (IN)**
• **NEOGI, Swati**
**721302 West Bengal (IN)**
• **SINGH, Gurpreet Kapur**
**121007 Faridabad, Haryana (IN)**
• **RAMAKUMAR, Sankara Sri Venkata**
**121007 Faridabad, Haryana (IN)**

(74) Representative: **Turner, Craig Robert et al
Venner Shipley LLP
200 Aldersgate
London EC1A 4HD (GB)**

(56) References cited:
EP-A1- 0 410 884          WO-A1-2010/107119
WO-A1-2010/116526      WO-A1-2021/107486
WO-A2-2011/159521      US-A1- 2020 309 320
US-B1- 7 195 133

**(Cont. next page)**

(52) Cooperative Patent Classification (CPC): (Cont.)
F17C 2223/0123; F17C 2223/036; F17C 2260/011;
F17C 2260/012; F17C 2260/042; F17C 2265/066;
F17C 2270/0168; F17C 2270/0184; Y02E 60/32

(52) Cooperative Patent Classification (CPC): (Cont.)
F17C 2223/0123; F17C 2223/036; F17C 2260/011;
F17C 2260/012; F17C 2260/042; F17C 2265/066;
F17C 2270/0168; F17C 2270/0184; Y02E 60/32

Description

## FIELD OF THE INVENTION

The present disclosure relates pressure vessels and more particularly, to a lightweight pressure vessel for the storage of fluids at high pressure.

## BACKGROUND

Hydrogen is preferred over conventional sources of energy because of its clean emissions and high efficiency. It produces three folds higher energy than the combustion engine along with water when fed to a fuel cell. Therefore, there is merit in increasing the usage of hydrogen gas as fuel. The gas is stored in a pressure range of 350-700 bar for onboard storage in the automobile sector. Globally, metal or composite cylinders are considered to be the most primitive solutions to store pressurized hydrogen gas. Metal cylinders are easy to manufacture, but are heavy and put a drag on the vehicle, reducing its fuel efficiency. A typical Type 1 metal cylinder weighs around three times more than a Type 3 cylinder. The lightweight Type 3 cylinder described in prior arts has challenges in commercial manufacturing and cost. Cylinders of Type 3 (Referred as Type-3 in the standard, ISO 15869) i.e., a metallic liner wrapped with a resin impregnated continuous filament.

US Patent no. US20150219277A1 discloses a process of manufacturing cylindrical vessels overwrapped with resin-impregnated fiber strands, wherein the process comprises manufacturing a metal liner and overwrapping with the fibers. Furthermore, the prior art discloses rotating the fiber overwrapped liner to prevent uneven deposition of the resin. Furthermore, US Patent no. US20200309320A1 describes a high-pressure tank comprising a liner including a cylindrical shaped trunk portion and dome portions disposed on both ends in axial direction. However, the prior art does not disclose other aspects as outlined in the key features of the proposed invention.

## SUMMARY

This summary is provided to introduce a selection of concepts, in a simplified format, that are further described in the detailed description of the invention. This summary is neither intended to identify key or essential inventive concepts of the invention and nor is it intended for determining the scope of the invention.

The invention is a pressure vessel as described in claim 1, and a method, as described to claim 11, for manufacturing a pressure vessel. In an embodiment of the present disclosure, a pressure vessel for storing fluid is disclosed. The pressure vessel includes a metallic liner comprising a cylindrical portion and a pair of ellipsoidal domes positioned at opposite ends of the cylindrical portion. Further, the pressure vessel includes a composite material wrapped over the cylindrical portion and the pair of ellipsoidal domes. The composite material is formed of a polymeric matrix reinforced with fibers, the composite material comprises of a combination of hoop layers and helical layers which are positioned in a predetermined order with respect to each other. A hoop layer is wrapped over a cylindrical portion of the metallic liner of the pressure vessel and a helical layer is wrapped over both the cylindrical portion and the pair of ellipsoidal domes. The helical layer is wrapped on each of the pair of ellipsoidal domes in a manner that a helical angle is defined at an intersection between the cylindrical portion and the pair of ellipsoidal domes.

In another embodiment of the present disclosure, a method for manufacturing a pressure vessel for storing fluid is disclosed. The method comprises applying a composite material over a metallic liner of the pressure vessel. A hoop layer of the composite material is wrapped with continuous filament winding operation over a cylindrical portion of the metallic liner of the pressure vessel and a helical layer of the composite material is wrapped over both the cylindrical portion and a pair of ellipsoidal domes of the metallic liner of the pressure vessel. The helical layer is wrapped on each of the pair of ellipsoidal domes in a manner that a helical angle is defined at an intersection between the cylindrical portion and the pair of ellipsoidal domes. Further, the method includes curing the composite overwrap in sequential stages: (i) 24 to 35 hours at a room temperature and (ii) 4 to 15 hours at a temperature in a range of 60° to 100°C. At both curing stages, the pressure vessel is rotated at a speed in range of 1-2 rpm.

To further clarify advantages and features of the present invention, a more particular description of the invention will be rendered by reference to specific embodiments thereof, which is illustrated in the appended drawings. It is appreciated that these drawings depict only typical embodiments of the invention and are therefore not to be considered limiting of its scope. The invention will be described and explained with additional specificity and detail with the accompanying drawings.

## BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:

Figures 1a and 1b illustrate different planar views of a pressure vessel for storing fluid, according to an embodiment of the present disclosure;

Figure 1c illustrates a portion of the pressure vessel as depicted in Figure 1a, according to an embodiment of the present disclosure;

Figures 2a and 2b illustrate schematic views of the pressure vessel, according to an embodiment of the present disclosure;

Figure 3a illustrates exemplary winding sequence for the pressure vessel, according to an embodiment of the present disclosure;

Figure 3b illustrates an exemplary thickness of the composite material in one of the ellipsoidal domes, at different helical angles, according to an embodiment of the present disclosure;

Figure 4 illustrates exemplary failure characteristics of the pressure vessel, according to an embodiment of the present disclosure;

Figure 5 illustrates a flowchart depicting a method for manufacturing the pressure vessel for storing fluid, according to an embodiment of the present disclosure;

Figure 6 illustrates a probable fiber path of winding for a 4-axis filament winding machine implemented in the manufacturing of the pressure vessel, according to an embodiment of the present disclosure;

Figure 7 illustrates an exemplary graph depicting pressure applied on the pressure vessel in a hydrostatic pressure burst test, according to an embodiment of the present disclosure; and

Figure 8 illustrates an exemplary failure characteristic of the pressure vessel, according to an embodiment of the present disclosure.

Further, skilled artisans will appreciate that elements in the drawings are illustrated for simplicity and may not have been necessarily been drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having benefit of the description herein.

## DETAILED DESCRIPTION OF FIGURES

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates. Unless otherwise defined, all technical and scientific terms used herein have the same meaning as commonly understood by one of ordinary skilled in the art to which this invention belongs. The system, methods, and examples provided herein are illustrative only and not intended to be limiting.

The term "some" as used herein is defined as "none, or one, or more than one, or all." Accordingly, the terms "none," "one," "more than one," "more than one, but not all" or "all" would all fall under the definition of "some." The term "some embodiments" may refer to no embodiments or to one embodiment or to several embodiments or to all embodiments. Accordingly, the term "some embodiments" is defined as meaning "no embodiment, or one embodiment, or more than one embodiment, or all embodiments."

More specifically, any terms used herein such as but not limited to "includes," "comprises," "has," "consists," and grammatical variants thereof do NOT specify an exact limitation or restriction and certainly do NOT exclude the possible addition of one or more features or elements, unless otherwise stated, and furthermore must NOT be taken to exclude the possible removal of one or more of the listed features and elements, unless otherwise stated with the limiting language "MUST comprise" or "NEEDS TO include."

Whether or not a certain feature or element was limited to being used only once, either way it may still be referred to as "one or more features" or "one or more elements" or "at least one feature" or "at least one element." Furthermore, the use of the terms "one or more" or "at least one" feature or element do NOT preclude there being none of that feature or element, unless otherwise specified by limiting language such as "there NEEDS to be one or more . . . " or "one or more element is REQUIRED."

Unless otherwise defined, all terms, and especially any technical and/or scientific terms, used herein may be taken to have the same meaning as commonly understood by one having an ordinary skill in the art.

Reference is made herein to some "embodiments." It should be understood that an embodiment is an example of a possible implementation of any features and/or elements presented in the attached claims. Some embodiments have been described for the purpose of illuminating one or more of the potential ways in which the specific features and/or elements of the attached claims fulfil the requirements of uniqueness, utility and non-obviousness.

Use of the phrases and/or terms such as but not limited to "a first embodiment," "a further embodiment," "an alternate embodiment," "one embodiment," "an embodiment," "multiple embodiments," "some embodiments," "other embodiments," "further embodiment", "furthermore embodiment", "additional embodiment" or variants thereof do NOT necessarily refer to the same embodiments. Unless otherwise specified, one or more particular features and/or elements described in connection with one or more embodiments may be found in one embodiment, or may be found in more than one embodiment, or may be found in all embodiments, or may be found in no embodiments. Conversely, any features and/or elements described in the context of separate embodiments may alternatively be realized as existing together in the context of a single embodiment.

Any particular and all details set forth herein are used in the context of some embodiments and therefore should NOT be necessarily taken as limiting factors to the attached claims. The attached claims can be realized in the context of embodiments other than the ones used as illustrative examples in the description below.

One of the embodiments of the present disclosure discloses a lightweight pressure vessel for storage of fluid comprising a composite made of fiber-reinforced polymeric matrix wrapped over an aluminum alloy-based metal liner. The said composite has a combination of hoop layer and helical layer that are provided in a predetermined order; wherein, hoop layer is wrapped over only a cylindrical part of the liner of the pressure vessel and helical layer over both the cylindrical part and a dome part of the liner of the pressure vessel. Liner geometry has been reformed in such a way as to avoid fiber slippage while winding at higher angle. The fiber bundling effects of higher winding angles increase the composite layer thickness in regions having less liner thickness i.e., the intersection between the dome and cylindrical part. This improves the strength of the cylinder, while less amount of additional composite is comparatively wound on the cylinder. It further terminates the growth of cracks from the cylindrical part to the dome part as observed in failure analysis. Thereby, preventing the failure of the pressure release device prior to burst. This prevents the explosion of the vessel at the time of leakage or accidents by controlling cracks within the cylindrical part itself. Wherein the safety of the vessel is improved considerably.

Embodiments of the present invention will be described below in detail with reference to the accompanying drawings.

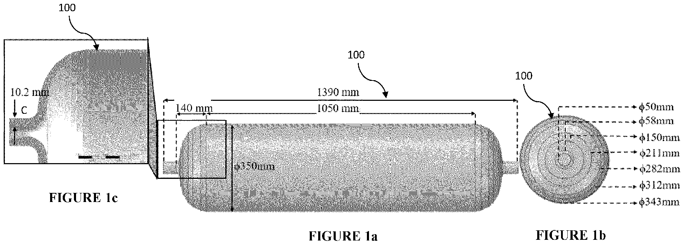

**Figures 1a and 1b** illustrate different planar views of a pressure vessel 100 for storing fluid, according to an embodiment of the present disclosure. **Figure 1c** illustrates a portion of the pressure vessel as depicted in Figure 1a, according to an embodiment of the present disclosure. In an embodiment, the pressure vessel 100 may be employed for storing the fluid including, but not limited to, liquid and gas, without departing from the scope of the present disclosure. The gas may be embodied as one of compressed natural gas, hydrogen gas, LPG, and mixture thereof. In an embodiment, the pressure vessel 100 may withstand an internal pressure of the fluid upto 800 bar, without departing from the scope of the present disclosure. The pressure vessel 100 mainly comprises a metallic liner and a filament wound composite wrap over the entire metallic liner. Constructional and manufacturing details of the pressure vessel 100 are explained in subsequent sections of the present disclosure.

Referring to Figures 1a and Figure 1b, in the illustrated embodiment, the pressure vessel 100 may include, but is not limited to, a metallic liner 102 and a composite material 104 wrapped over the metallic liner 102. The metallic liner 102 may include a cylindrical portion 106 and a pair of ellipsoidal domes 108 positioned at opposite ends of the cylindrical portion 106. The pair of ellipsoidal domes 108 may be individually be referred to as a first ellipsoidal dome 108-1 and a second ellipsoidal dome 108-2. Further, the pair of ellipsoidal domes 108 may interchangeably be referred to as the ellipsoidal domes 108-1, 108-2, without departing from the scope of the present disclosure.

The metallic liner 102 may be positioned at an inner surface of the pressure vessel 100. In an embodiment, the metallic line 102 may be manufactured using a process of spin forming. The metallic liner 102 may be T6 treated and O-conditioned. Further, the metallic liner 102 may be enclosed by the ellipsoidal domes 108-1, 108-2 connected to the cylindrical portion 106 in between. The metallic liner 102 may have a uniform thickness across the cylindrical portion 106 and a varied thickness across each of the ellipsoidal domes 108-1, 108-2.

According to the invention, the thickness of the metallic liner 102 is less at the intersection between the ellipsoidal domes 108-1, 108-2 and the cylindrical portion 106. The thickness of the metallic liner 102 in the vicinity of the pair of openings 202-1, 202-2 of the ellipsoidal domes 108-1, 108-2 is four times the thickness of the metallic liner 102 in the cylindrical portion 106. In an embodiment, the metallic liner 102 may be made up of Aluminum alloy-based material, without departing from the scope of the present disclosure.

In the illustrated embodiment, the pressure vessel 100 may include a pair of openings 202 at the ellipsoidal domes 108-1, 108-2. The pair of openings 202 may individually be referred to as a first opening 202-1 and a second opening 202-2. The first opening 202-1 may be formed at an end of the first ellipsoidal dome 108-1. Similarly, the second opening 202-2 may be formed at an end of the second ellipsoidal dome 108-2. Further, in an embodiment, the pair of openings 202 may interchangeably be referred to as the openings 202-1, 202-2, without departing from the scope of the present disclosure. A center line of the openings 202-1, 202-2 coincides with a longitudinal axis of the cylindrical portion 106.

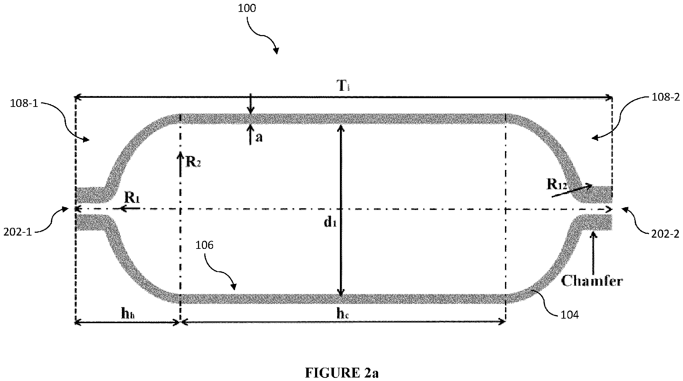

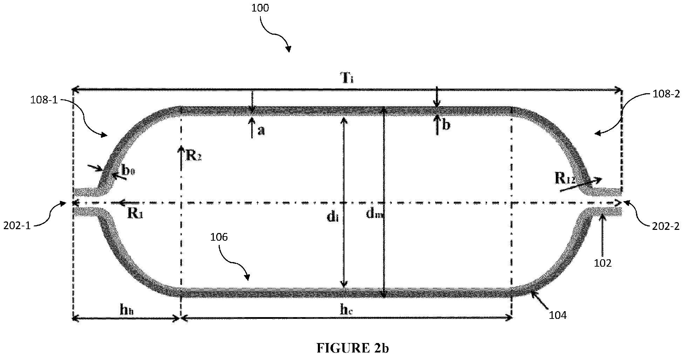

Figures 1a and 1b illustrate exemplary dimensional characteristics of the pressure vessel 100. It should be understood that the dimensions depicted are exemplary and should not be construed as limiting. Referring to Figures 2a and 2b, in an example, the thickness 'a' and a height 'h$_c$' of the cylindrical portion 106 of the metallic liner 102 is 4.8 mm and 1050 mm. Further, the diameter 'd' of the cylindrical portion 106 is in a range of 325 mm to 375 mm. The shortest distance 'R$_1$' defined between a center of each of the ellipsoidal dome 108-1 is 140 mm. The longest distance 'R$_2$' coincides with a radius of the cylindrical portion. A diameter 'd$_c$', along with the thickness of the cylindrical portion, of each of the pair of openings is 50 mm. The total length of the pressure vessel between the pair of openings of the ellipsoidal domes is 1390 mm.

In an embodiment, the cylindrical portion 106 of the pressure vessel 100 may be connected to at least one control valve and at least one pressure release device through the openings 202-1, 202-2. In particular, the at least one control valve and the at least one pressure release device may be positioned at the openings 202-1, 202-2 of the pressure vessel 100, without departing from the scope of the present disclosure.

The composite material 104 may be wrapped over the cylindrical portion 106 and the ellipsoidal domes 108-1, 108-2. The composite material 104 may interchangeably be referred to as the composite overwrap 104. In an embodiment, the composite material 104 may be formed of a polymeric matrix reinforced with fibers, without departing from the scope of the present disclosure. The reinforcing fiber may be embodied as glass, aramid, carbon, and a combination thereof. Preferably, carbon fiber is suitably coated with a coating to make it compatible with the epoxy resin. Further, the polymeric matrix may be embodied as one of thermoplastic resin and thermosetting resin. In an embodiment, the thermoplastic resin may be embodied as one of polyethylene and polyamide. The thermosetting resin may be embodied as one of epoxy, modified epoxy, polyester, and polyvinyl ester.

The composite material 104 may include a combination of hoop layers and helical layers which are positioned in a predetermined order with respect to each other. In an embodiment, a hoop layer may be wrapped over the cylindrical portion 106 of the metallic liner 102 of the pressure vessel 100. In an embodiment, a number of hoop layers may be in a range of 10 to 30, more preferably 15 to 26. A thickness of the hoop layer may be in a range of 0.11 mm to 0.66 mm, more preferably in the range of 0.22 mm to 0.44 mm.

Further, a helical layer may be wrapped over both the cylindrical portion 106 and the ellipsoidal domes 108-1, 108-2. The helical layer may be wrapped on each of the ellipsoidal domes 108-1, 108-2 in a manner that a helical angle is defined at an intersection between the cylindrical portion 106 and the ellipsoidal domes 108-1, 108-2. In an embodiment, the helical angle may be in a range of 10° to 45°, without departing from the scope of the present disclosure. The helical angle may be higher at the intersection between the ellipsoidal domes 108-1, 108-2 and the cylindrical portion 106. In particular, the helical angle may be higher at the intersection between the first ellipsoidal dome 108-1 and the cylindrical portion 106. Similarly, the helical angle may be higher at the intersection between the second ellipsoidal dome 108-2 and the cylindrical portion 106.

In an embodiment, a number of helical layers may be in a range of 25 to 45, more preferably 29 to 40. A thickness of the helical layer may be in a range of 0.44 mm to 5 mm, more preferably in the range of 0.47mm to 2.5 mm. The thickness of the helical layer may be uniform in the cylindrical portion 106. The thickness of the helical layer in the ellipsoidal domes 108-1, 108-2 may be derived by using the below-mentioned equation:

$$H_{dome} = H_{cylinder} \left( \sqrt{\frac{R_{cylinder}^2 - (R_{opening} + B_\phi)^2}{R_{location}^2 - (R_{opening} + B_\phi)^2}} \right)$$

Where,

$H_{dome}$ is the layer thickness at a position,
$H_{cylinder}$ is layer thickness at the cylindrical region,
$R_{cylinder}$ is equator radius,
$R_{opening}$ is pole radius,
$B_{\phi}$ is the fiber bandwidth for winding that angle, and
$R_{location}$ is the radius at that location.

In an embodiment, the thickness of the helical layer may be higher in the ellipsoidal domes 108-1, 108-2 compared to the thickness of the helical layer in the cylindrical portion 106. The thickness of the helical layer may be highest in the vicinity of the trajectory of each of the ellipsoidal domes 108-1, 108-2, up to which it covers the pressure vessel 100. In an embodiment, a length to diameter ratio of the cylindrical portion 106 may be in a range of 2.5 to 3. Further, each of the ellipsoidal domes 108-1, 108-2 may have a radius to height ratio in a range of 1.25 to 1.30.

Referring to Figure 1b, a thickness 'b' of the windings is 20.25 mm throughout the cylindrical portion of the pressure vessel, except at the ends of the ellipsoidal domes where the thickness is 25 mm. An intermediate thickness of the ellipsoidal dome is determined using the derived equation which is in the range of 22-27 mm. Further, the diameter of the cylindrical portion of the metal liner '$d_1$' is fixed at 350 mm. Metal adapters of the pressure vessel may have a diameter '$d_c$' (with thickness) is 51 mm. As shown in Figure 1c, the thickness of the metal adapter 'c' is 10.2 mm. The total length of the complete geometry from the mouth of the metal adapter to the end of dome is Tc 1390 mm.

DESIGN AND STRESS ANALYSIS

Subsequent sections of the present disclosure explain exemplary design parameters, service conditions, stress analysis, and other exemplary design considerations implemented for designing the pressure vessel 100 are explained in subsequent sections of the present disclosure.

Table 1 illustrates various service conditions adopted for the development of the pressure vessel along with the requirement specified by the standard, ISO 15869, according to an embodiment of the present disclosure. It should be appreciated by a person skilled in the art that Table 1 is included to provide a better understanding of the present disclosure and therefore, should not be construed as limiting.

**Table 1**

| Service conditions | Requirements adopted for the development |
| --- | --- |
| Service life | The minimum service life is targeted as 15 years (Confirmed by the pressure cycling test) |
| Working pressure | 350 bar |
| Max. filling pressure | 455 bar |
| Gas composition | Compatible with the requirement and as per the standard |
| External surfaces | Compatible with the requirement and as per the standard |
| Settled temperature range of gas in cylinder | - 40°C to + 65°C |
| Settled temperature range of materials of cylinder | - 40°C to + 82°C |

Table 2 illustrates various design parameters adopted for development of the pressure vessel 100 along with the requirement specified by the standard, ISO 15869, according to an embodiment of the present disclosure. It should be appreciated by a person skilled in the art that Table 2 is included to provide a better understanding of the present disclosure and therefore, should not be construed as limiting.

**Table 2**

| Design Basis parameters | Adopted for the development |
| --- | --- |
| Minimum test pressure | 525 bar |
| Minimum burst pressure | 700 bar since carbon fiber is used |
| Stress analysis | ANSYS 19.0 Static structural and ACP Pre-Post module, SHELL 181 and SURF 154 is used. |

(continued)

| Design Basis parameters | Adopted for the development |
|---|---|
| Stress analysis of composite cylinders | Carried out at 350 bar to simulate burst pressure, further failure analysis is carried out at the obtained burst pressure |
| Openings | Two openings are provided at the ends of the domes of the cylinder through the connection of end boss |

DESIGN OF THE PRESSURE VESSEL

The design calculation methodology to determine the hoop layer and the helical layer thickness is an extension of Netting analysis methodized after incorporating the thickness variation in the geometry of the metallic liner 102 along with the composite thickness calculations at the ellipsoidal domes 108-1, 108-2.

The desired number of helical and hoop layers in the cylindrical portion 106 can be determined by dividing the total helical and the hoop thickness with the thickness of individual helical and hoop layer, respectively. The thickness of helical and hoop layer depends on the thickness of the resin impregnated fiber rovings. The thickness of the resin impregnated carbon fiber roving used for the development of the pressure vessel 100 depends on the manufacturing characteristics, discussed in later sections of the present disclosure. The thickness of the resin impregnated carbon fiber roving may be in a range of 0.1 mm to 3.0 mm, more preferably in the range of 0.22 to 1.5 mm. The desired number of helical layers in the ellipsoidal domes 108-1, 108-2 is calculated after considering the load-bearing characteristics of the metallic liner 102. In an example, at least twenty hoop layers and twenty-one hoop layers are suitable as per the netting analysis. More helical and hoop layers are added to meet the criteria as per standard, ISO 15869. Therefore, different winding angles are tried during the designing of the pressure vessel 100 to determine the angle and coverage of the winding where no slippage will occur.

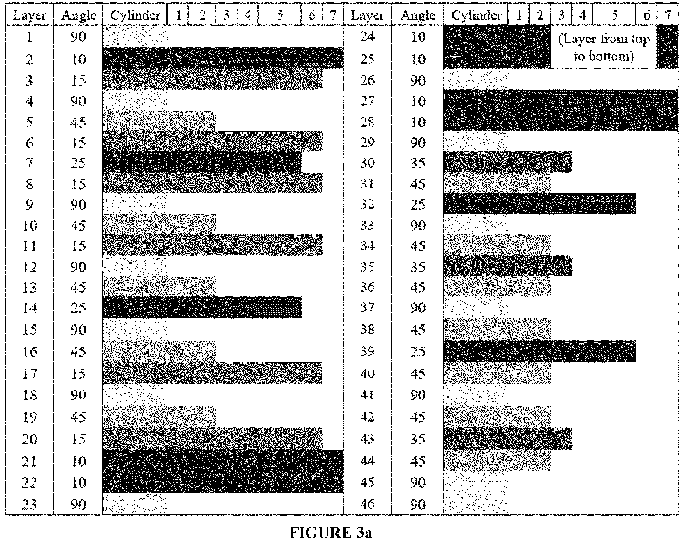

**Figure 3a** illustrates an exemplary winding sequence for the pressure vessel, according to an embodiment of the present disclosure. From the trials 10° 15°, 25°, 35°, and 45°angles are obtained as the non-slipping angles of winding. Helical and hoop layers are arranged in such a way that the weight of the cylinder is minimum while maintaining the desired properties. More emphasis is given on adding 45° angles in the winding pattern for enhanced coverage of the intersection between the cylindrical portion 106 and the ellipsoidal domes 108-1, 108-2. The number and thickness of the helical and hoop layers can be varied depending upon the requirement and desired properties. Various other permutation and combinations having these layers also fall within the purview of the present disclosure. An example is summarized herein below for illustration. Based on the above discussion the winding sequence for example is depicted in Figure 3a.

Table 3 illustrates exemplary parameters, such as the angle of winding, hoop thickness, and helical thickness, calculated for different locations in the ellipsoidal domes 108-1, 108-2 and in the cylindrical portion 106, according to an embodiment of the present disclosure. It should be appreciated by a person skilled in the art that Table 3 is included to provide a better understanding of the present disclosure and therefore, should not be construed as limiting.

**Table 3**

| Dome section | Dome height (mm) | Radius (mm) | Liner thickness (mm) | Winding angles (°) | Number of Layers | Layer thickness (mm) | Total angle thickness (mm) | Composite thickness (mm) |
|---|---|---|---|---|---|---|---|---|
| 1 | 0 | 152.5 | 4.8 | 10° | 7 | 0.44 | 3.08 | 20.24 |
| | | | | 15° | 5 | 0.44 | 2.2 | |
| | | | | 25° | 5 | 0.44 | 2.2 | |
| | | | | 35° | 3 | 0.44 | 1.32 | |
| | | | | 45° | 12 | 0.44 | 5.28 | |
| | | | | 90° | 14 | 0.44 | 6.16 | |
| 2 | 24 | 149 | 8.83 | 10° | 7 | 0.45 | 3.15 | 15.11 |
| | | | | 15° | 5 | 0.45 | 2.25 | |
| | | | | 25° | 5 | 0.46 | 2.3 | |
| | | | | 35° | 3 | 0.47 | 1.41 | |
| | | | | 45° | 12 | 0.5 | 6 | |

(continued)

| Dome section | Dome height (mm) | Radius (mm) | Liner thickness (mm) | Winding angles (°) | Number of Layers | Layer thickness (mm) | Total angle thickness (mm) | Composite thickness (mm) |
|---|---|---|---|---|---|---|---|---|
| 3 | 54 | 136 | 16.6 | 10° | 7 | 0.5 | 3.5 | 20.1 |
| | | | | 15° | 5 | 0.51 | 2.55 | |
| | | | | 25° | 5 | 0.53 | 2.65 | |
| | | | | 35° | 3 | 0.68 | 2.04 | |
| | | | | 45° | 12 | 0.78 | 9.36 | |
| 4 | 71 | 123 | 23.5 | 10° | 7 | 0.55 | 3.85 | 12.3 |
| | | | | 15° | 5 | 0.58 | 2.9 | |
| | | | | 25° | 5 | 0.66 | 3.3 | |
| | | | | 35° | 3 | 0.75 | 2.25 | |
| 5 | 96 | 92 | 21.2 | 10° | 7 | 0.75 | 5.25 | 15.3 |
| | | | | 15° | 5 | 0.98 | 4.9 | |
| | | | | 25° | 5 | 1.03 | 5.15 | |
| 6 | 108 | 66 | 18.4 | 10° | 7 | 1.37 | 9.59 | 15.29 |
| | | | | 15° | 5 | 1.14 | 5.7 | |
| 7 | 118 | 26 | 10.58 | 10° | 7 | 2.12 | 14.84 | 14.84 |

wherein X(R) represents the radius of the ellipsoidal domes 108-1, 108-2 of the metallic liner 102 along an X-axis and a Y-axis represents a length of each of the ellipsoidal domes 108-1, 108-2 along the longitudinal direction or Y-axis.

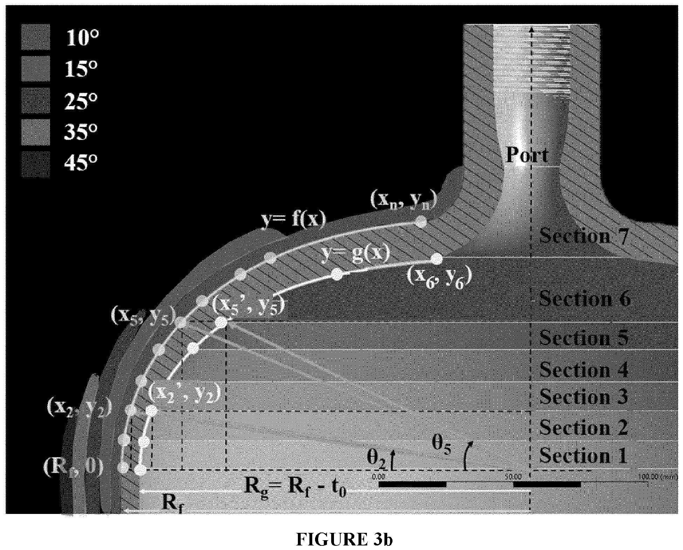

**Figure 3b** illustrates exemplary thickness of the composite material in one of the ellipsoidal domes 108-1, 108-2, at different helical angles, according to an embodiment of the present disclosure. As an example, five helical angles such as 10° 15°, 25°, 35°, and 45° angles are considered. Therefore, for each helical angle of winding at the cylindrical portion 106, a different helical winding angle at the ellipsoidal domes 108-1, 108-2 is obtained. A contour of the ellipsoidal domes 108-1, 108-2 is gradually tapered from the cylindrical portion 106 towards the openings 202-1, 202-2. In Figure 3b, $R_g$ is an inner equator radius of the dome section 108-1, 108-2. Further, $R_f$ is an outer equatorial radius of the dome 108-1, 108-2. Furthermore, $t_0$ is a liner thickness in the cylindrical section 106. The coordinates $(x_i, y_i)$ and $(x_i^i, y_i)$ are the outer and inner dome coordinates of dome 108-1, 108-2. The outer dome coordinates of the dome 108-1, 108-2 are given in Table 3, and the inner dome coordinates of 108-1, 108-2 are calculated from the inner liner curve traced using ultrasound as illustrated in Figure 2a. $\theta_i$ is the factor for converting the coordinates of liner from XY coordinate system to radial coordinate system for a given dome height.

Therefore, the angle of winding and the helical thickness in the ellipsoidal domes 108-1, 108-2 may vary along an axial direction at different sections of the ellipsoidal domes 108-1, 108-2. The helical thickness of a single layer is considered as 0.44 mm, without departing from the scope of the present disclosure. A thickness of the hoop layer is calculated by considering a single fiber layer as 0.22 mm.

Stress Analysis

As per the standard ISO 15869, the stress analysis is to be carried out at the design burst pressure, wherein the details of the developed FEA model are:

The metallic liner 102 and the composite material 104 act as body-1 and body-2, respectively. SHELL181 is used for these CAD bodies (body-1 and body-2), which were meshed with an element size of 5 mm. Three other types of elements were created at the FE level. SURF154 is used to define the internal pressure load acting on the inner surface of the liner, i.e., the body-1. It creates an extra layer of elements for applying surface loads like pressure. Contact between the outer surface of the liner and the inner surface of the composite overwrap 104 is defined through contact pairs between the two bodies (body-1 and -2). CONTACT174 element on body-1 and TARGET170 element on body-2 create a layer of surface elements to detect the contact between these two bodies. The modeling plies were defined in the ACP Pre module. The geometry was then transferred to the static structural module for defining the boundary conditions and calculating the burst pressure. The model was post-processed in the ACP Post module to predict vessel failure. The engineering data was experimentally determined using coupon laminate testing as per ISO 527-4. The results of the testing for a 0.56 fiber weight fraction carbon epoxy laminate are summarized in Table 4 below.

Table 4 illustrates exemplary properties of carbon/epoxy composite used for stress analysis, according to an embodiment of the present disclosure. It should be appreciated by a person skilled in the art that Table 4 is included to provide a better understanding of the present disclosure and therefore, should not be construed as limiting.

**Table 4**

| Sch. | Property | Value |
|------|----------|-------|
| 1. | Density (kg/m3) | 1540 |
| 2. | Young's Modulus in X-direction (MPa) | 9.3E4 |
| 3. | Young's Modulus in Y-direction (MPa) | 2E3 |
| 4. | Young's Modulus in Z-direction (MPa) | 2E3 |
| 5. | Longitudinal Tensile Strength (MPa) | 1979 |

The stress analysis results of the Static Structural module were used to predict the theoretical burst pressure of the vessel. Von Mises yield criteria is used for the stress analysis. Von Mises stress is the resultant stress of the stresses in the tangential direction and in X and Y directions. Von Mises yield criteria are mostly used to predict if a specific design can withstand a certain load by comparing the Von Mises stress with the design stress of the materials.

According to this criterion, the Von Mises stress induced in the material should be less than the design strength of the material for the vessel to withstand the load. If the Von Mises stress exceeds the design stress, then the pressure vessel 100 will burst.

As an example, the hoop strength of the composite materials 104 used for the pressure vessel 100 obtained using the design calculation is found to be 1982.7 MPa. The Von Mises stress at a given pressure is determined by the results of stress analysis, from where the corresponding burst pressure resulting in 1982.7 MPa is calculated. It indicates that the pressure vessel 100 will be able to withstand the internal pressure up to a pressure less than the burst pressure after which it will fail on increasing the load. The stress analysis of the pressure vessel 100 subjected to an internal pressure of 712 bar which is above the design burst pressure is the simulated burst pressure and the Von Mises stress developed in the cylindrical portion 106 at this load is 1983 MPa which is higher than the design strength of 1982.7 MPa. Since the Von Mises stress at design burst pressure of 712 bar is higher than the design strength, the pressure vessel 100 will be able to withstand up to the design burst pressure.

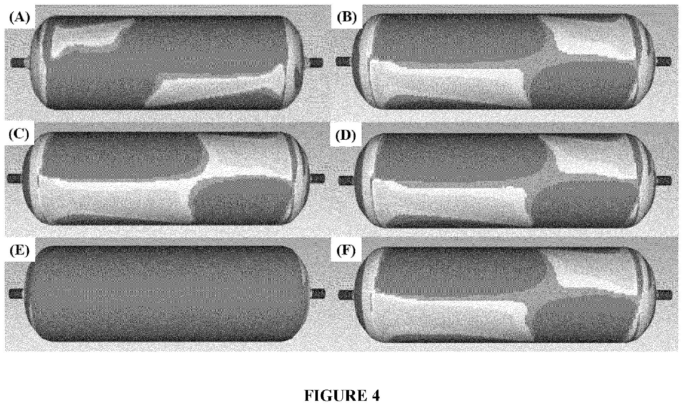

Various failure theories were used to predict the failure characteristics of the composite overwrap 104. The results are illustrated in Figure 4, where 4(A, (B), (C), (D), (E), and (F) represents the failure characteristics predicted using Tsai-Wu, Tsai-Hill, Hoffmann, Puck, Maximum strain, and Maximum stress criteria, respectively. The zones in red have the maximum chances of failure in times of burst, i.e., they can be the sites of crack initiation before burst.

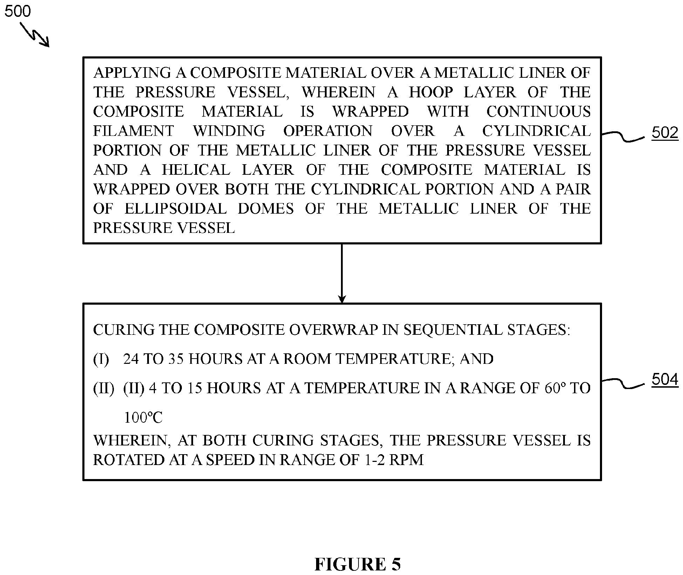

**Figure 5** illustrates a flowchart depicting a method 500 for manufacturing the pressure vessel 100 for storing fluid, according to an embodiment of the present disclosure. For the sake of brevity, features of the pressure vessel 100 that are already explained in detail in the description of Figure 1a, Figure 1b, Figures 2a, Figure 2b, Figure 3a, Figure 3b, and Figure 4 are not explained in detail in the description of Figures 5.

At block 502, the method 500 includes applying the composite material 104 over the metallic liner 102 of the pressure vessel 100. In an embodiment, the hoop layer of the composite material 104 may be wrapped with continuous filament winding operation over the cylindrical portion 106 of the metallic liner 102 of the pressure vessel 100. The helical layer of the composite material 104 may be wrapped over both the cylindrical portion 106 and the pair of ellipsoidal domes 108-1, 108-2 of the metallic liner 102 of the pressure vessel 100. Further, the helical layer may be wrapped on each of the pair of ellipsoidal domes 108-1, 108-2 in a manner that the helical angle is defined at an intersection between the cylindrical portion 106 and the pair of ellipsoidal domes 108-1, 108-2.

At block 504, the method 500 includes curing the composite overwrap in sequential stages. In a first curing stage, the method includes curing the composite overwrap for 24 to 35 hours at a room temperature. Subsequently, in a second curing stage, the method includes curing the composite overwrap for 4 to 15 hours at a temperature in a range of 60° to 100°C. At both curing stages, the pressure vessel 100 may be rotated at a speed in range of 1-2 rpm, without departing from the scope of the present disclosure. The exemplary manufacturing process for the pressure vessel 100 is further elaborated in the subsequent sections of the present disclosure.

MANUFACTURING OF PRESSURE VESSEL

The spin-formed metallic liner 102 is used as a mandrel and the composite material 104 is wound over the metallic liner 102. A 4-axis filament winding machine is used to wind the composite material 104. The winding parameters are set to avoid chances of fiber slippage or breakage, interlayer delamination, large gaps between fiber spool due to improper bandwidth, and unsatisfactory composite performance due to low fiber volume fraction. The automation of the winding process further reduces the chances of incurring defects due to human interventions.

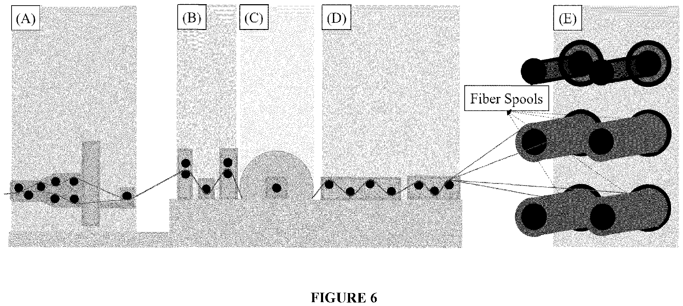

**Figure 6** illustrates a probable fiber path of winding for a 4-axis filament winding machine implemented in the manufacturing of the pressure vessel 100, according to an embodiment of the present disclosure. The present disclosure discloses a process to ease the manufacturing process of type-3 cylinders for the storage of compressed hydrogen gas. As explained earlier, the pressure vessel 100 comprises the metallic liner 102 and the carbon-epoxy composite overwrap 104. The process of developing the pressure vessel 100 depends on the various parameters as explained in the subsequent sections of the present disclosure.

The liner profile plays an important role in determining the winding parameters. A study to optimize the winding parameters illustrated the use of ellipsoid dome heads with a Length to diameter ratio of between 1.25 to 1.30 in order to facilitate the use of higher values of winding angles during winding. The intersection between the ellipsoidal domes 108-1, 108-2 and the cylindrical portion 106 incurs proper coverage and thereby, enhancing the safety of the pressure vessel 100.

A seamless aluminum alloy liner, such as the metallic liner 102, is manufactured using the process of spin forming, which is then T6 heat treated and O-conditioned for improving the ductility of the metallic liner 106 and reducing the defect size. This reduces the susceptibility of hydrogen embrittlement in the material of the metallic liner 102.

The winding pattern derived using netting analysis is wound around the metallic liner 102 using filament winding technology. The carbon fiber acts as a reinforcement for the epoxy matrix system. The fiber volume fraction plays an important role in determining the strength of the composite material 104. The electronic tensioners are used as the tensioning mechanism during winding.

The path of the fiber from spools to the mandrel should be smooth and proper to avoid fiber breakage, improve the bandwidth, and ensure proper placement of fiber on the mandrel. The number of placement pulleys in the pay-out eye is calculated as a function of fiber tensioning capacity and system requirements for higher fiber volume fraction without fiber breakage during winding. The appropriate value of tension aids in squeezing out the excess resin during composite winding. Excessive tensioning leads to layer delamination. Required tension as a function of total composite layer thickness is determined for appropriate winding.

Resin bath plays an important role in wetting the fiber before winding. Irregular fiber wetting disrupts load transfer among the reinforcements as the matrix transfers the load. Excessive fiber wetting reduces the fiber volume fraction. Installment of doctor blades at required angles is necessary for the proper functioning of the resin bath. A temperature controller is added to the resin bath system to avoid the curing of resin during winding. The curing of resin in intermediate winding leads to interlayer delamination.

The excess resin squeezed out on the mandrel due to tensioned fibers of the subsequent layers is automatically collected using a movable doctor blade, which is added as an add-on to the payout eye. The angle of contact is varied as per a function that depends on the winding location. The fibers are placed across a geodesic fiber path to avoid slipping. The geodesic fiber path is determined as a function of cylinder radius, non-slipping opening radii, and the dome height.

The winding parameters mainly bandwidth, winding speed, offset of the payout eye, and fiber tension depend on the winding angle, layer number, non-slipping opening radii, required fiber bundling near the poles, and machine capabilities. The fiber path for changing from hoop layers to helical layers and vice versa during winding is determined to aid in process automation.

The thickness distribution of individual composite layers in the ellipsoidal domes 108-1, 108-2 depends on the winding parameters. A correlation between the layer thickness, non-slipping opening radii, dome position, cylindrical radius, and layer thickness at the cylindrical region is derived using the results of manufacturing trials. Various parameters associated with winding of the composite material on the metallic liner are explained in the subsequent sections of the present disclosure.

PROCESS PARAMETERS

a. Fiber tensioning mechanism: The fiber spools are tensioned initially using a 105005 Dynaspede electronic tensioner, with a capacity of providing 5Kg torque. The controller value is initially set to provide a torque of 1.75Kg to the dry fibers which leave the fiber spools and enter the tensioning pulleys.

b. Tensioning mechanism: Various pulleys are placed with uniform distancing. The increase in tension caused by tensioning mechanism depends on the contact area between the fiber tow and the pulley, pulley material, and coefficient of friction between the fiber tow and the pulley material. In this case, Teflon pulleys are used; sand-blasting treatment increases the coefficient of friction of these pulleys.

c. Pay-out eye: Pay-out eye plays a crucial role in the placement of fiber spools together to form a bandwidth. A bandwidth with no gaps in between the adjacent fiber tow, or overlaps between the fiber tow is considered an efficient bandwidth. It yields better composite coverage in a single winding cycle, reducing the fiber bundling effects near the pole section, improving load transfer between the reinforcements, and reducing the winding time.

d. Resin bath: Impregnation of resin plays a vital role in determining the properties of the composite. High resin fraction in the composite reduces the strength of the composite. Therefore, a less viscous resin is used to impregnated the resin. Two doctor blades are added to squeeze out the excess resin, giving a composite with a high fiber volume fraction and better ultimate tensile strength and mechanical properties. The resin has a gel time of 50 mins, which can be increased by instilling a temperature controller in the resin bath. The resin bath is maintained at a temperature of 15°C which increases the gel time by 2 hours. Partial curing of previously wound composite layers during winding may lead to interlayer delamination, for which installation of a temperature controller is the acceptable solution.

e. Winding Mechanism: The composite is wound across a geodesic fiber path, using a 4-axis filament winding machine. The winding speed influences the accuracy of fiber placement during winding by affecting the fiber slippage characteristics. The geodesic fiber path is determined in CADFIL software which depends on the winding angle, opening radii, coefficient of friction, offset, bandwidth, mandrel profile, and dome curvature. These winding parameters are optimized for the required winding pattern. The mandrel chap changes with the progress of the winding for which the parameters are changed accordingly. The probable values of winding parameters with the least chances of incurring manufacturing defects are given in Table 6.

Table 6 illustrates exemplary winding parameters for winding the composite material on the ellipsoidal domes 108-1, 108-2 and the cylindrical portion 106, according to an embodiment of the present disclosure. It should be appreciated by a person skilled in the art that Table 6 is included to provide a better understanding of the present disclosure and therefore, should not be construed as limiting.

**Table 6**

| Parameter | Value in the cylindrical region | Value in the dome section |
|---|---|---|
| Tension | 2.5 - 3.8 kgf | 2.5-3.8 kgf |
| Bandwidth | 21 mm | Varies along with the dome height |
| Cylinder Offset | 20-50 mm | 20-50 mm |
| Axial Offset | 200-250 mm | 200-250 mm |
| Winding speed | 18000-20000 mm/min | 2400 - 2500 mm/min |
| Friction coefficient | 0.02-0.08 | 0.02-0.08 |
| Profile type | Cylinder | Torispherical |
| Dimensions | R1 = 175 mm; L = 1050 mm | R2= 260mm; R3 = 105 mm |

Consolidating the composite overwrap

a. Reducing the resin fraction: A doctor blade is added to the pay-out eye for automation of the process of wiping the excess resin. The angle of contact varies between 30-60°. This improves the fiber volume fraction of the cylinder by wiping the excess resin squeezed after the consolidation of composite layers.

b. Curing: The manufactured prototype is rotated axially till the curing is completed, to avoid uneven deposition of resin in the composite overwrap. The resin shrinks during curing, proper rotation of the vessel ensure uniform shrinkage as the matrix is uniformly distributed across the composite to transfer the load properly.

Accordingly, the pressure vessel 100 is manufactured for testing. The total weight measured for the pressure vessel 100 is found in the range of 30 to 35 kg. The pressure vessel 100 leads to the reduction of weight of about 30 to 54 % as compared with conventional cylinders as available in the existing art.

TESTING

The testing was carried out as per the International Standard, ISO 15869.

Description of exemplary tests performed and results are explained below:

1. Hydrostatic pressure burst test

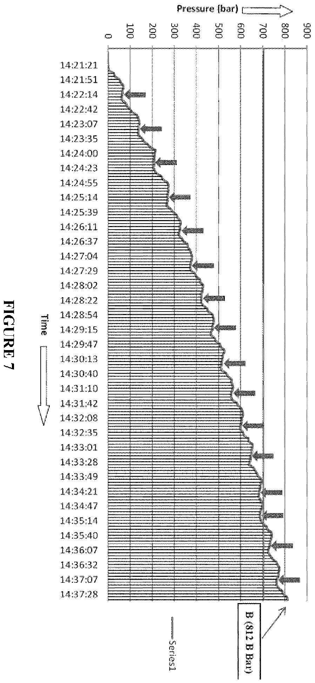

Hydrostatic pressure burst test is carried out using the pressure vessel 100, as per the standard ISO 15869. The pressure vessel 100 is pressurized hydrostatically increased at the rate of 0.48 MPa/s up to 50 MPa after which the pressurizing rate is reduced to 0.37 MPa/s. A hold was provided in the control unit for 10 secs at 70 MPa i.e., minimum burst pressure, the pressure vessel 100 burst at a pressure of 812 bar as depicted in Figure 7, which is above the recommended pressure as per the standard (i.e., 700 bar).

2. Failure analysis

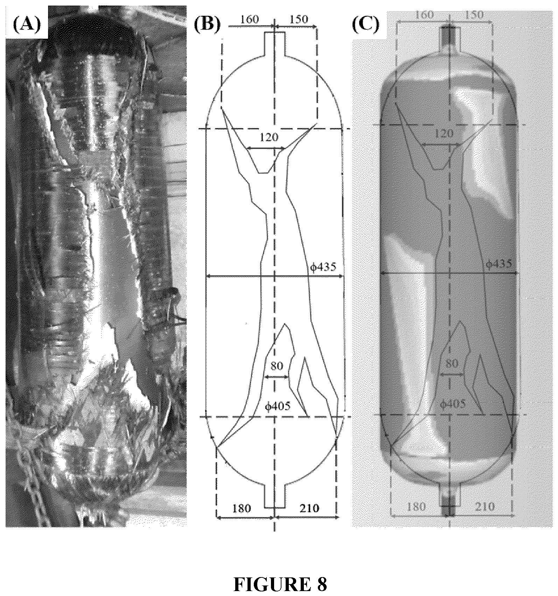

The results of finite element analysis were compared with the experimentally obtained results to validate the design model. The theoretical burst pressure of the pressure vessel was predicted to be 71MPa, while the actual value was determined to be 81MPa. Therefore, the design has a safety factor of 10MPa, for which it could be used to design pressure vessels by predicting the burst pressure. The theoretical failure characteristics of the pressure vessel as per different failure criteria as given in Figure 4, were compared with the obtained failure characteristics as given in Figure 8(A) and (B). Tsai-Wu failure criterion was found to be a reliable criterion for predicting the failure. The comparison between the theoretical and actual failure is given in Figure 8(C).

The above-explained pressure vessel 100 and the method of manufacturing the pressure vessel 100 lead to the following advantages:

The present disclosure provides a lightweight pressure vessel 100 for the storage of fluid. The present disclosure also discloses a method of manufacturing the lightweight pressure vessel 100 with a practical approach to yield better performance results in terms of weight, cost, and safety of the vessel.

The pressure vessel 100 is 30 to 50% lighter than the conventional pressure vessels. The pressure vessel 100 withstands the internal pressure up to 710 bar. The pressure vessel 100 is used for the storage of fluid under high pressure. The pressure vessel 100 is mainly for midsize vehicles and due to its lightweight, it will lead to better fuel efficiency and less load on the vehicle.

In the present disclosure, the inclusion of higher winding angles in the winding pattern is possible after reforming the geometry of the metallic liner 102 to avoid fiber slippage while winding these higher winding angles. The fiber bundling effects of higher winding angles increase the composite layer thickness in regions having less liner thickness i.e., the intersection between the ellipsoidal domes 108-1, 108-2 and cylindrical portion 106. This improves the strength of the pressure vessel 100, while less amount of additional composite is comparatively wound on the metallic liner 102 of the pressure vessel 100. It further terminates the growth of cracks from cylindrical portion 106 to the ellipsoidal domes 108-1, 108-2 part as observed in failure analysis results and thereby, preventing the failure of pressure release device before burst. This prevents the explosion of the pressure vessel 100 at the time of leakage or accidents by controlling cracks within the cylindrical portion 106 itself. Wherein the safety of the pressure vessel 100 is improved considerably without influencing the cost of the pressure vessel 100.

The pressure vessel 100 is manufactured by the method which is commercially feasible and is more economic while satisfying all the safety standards provided in ISO 15869. The pressure vessel 100 is wound methodically to avoid gaps between consecutive layers of the composite material 104 and is capable to sustain the internal pressure of fluid up to 800 bar. The present disclosure also discloses the method for manufacturing the pressure vessel 100 for storing the fluid.

As explained earlier, the method includes applying a composite hoop layer with continuous filament winding operation over a cylindrical part of the liner of the pressure vessel alternatively with a helical layer over both the cylindrical part and a dome part of the liner of the pressure vessel, in parts covering dome section with a maximum value of possible winding angle and minimum fiber bundling effects. More particularly, the present disclosure relates to a lightweight composite pressure vessel for the storage of compressed hydrogen gas and the method of manufacturing of the pressure vessel 100 to yield better weight performance. More particularly, the present disclosure relates to a lightweight composite Type 3 pressure vessel/cylinder, such as the pressure vessel 100, for storing compressed hydrogen gas and the method of design and manufacturing of the pressure vessel 100.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements.

Elements from one embodiment may be added to another embodiment.

**Claims**

1. A pressure vessel (100) for storing fluid, the pressure vessel (100) comprising:

   a metallic liner (102) comprising a cylindrical portion (106) and a pair of ellipsoidal domes (108-1, 108-2) positioned at opposite ends of the cylindrical portion (106); and
   a composite material (104) wrapped over the cylindrical portion (106) and the pair of ellipsoidal domes (108-1, 108-2), wherein the composite material (104) is formed of a polymeric matrix reinforced with fibers, the composite material (104) comprises of a combination of hoop layers and helical layers which are positioned in a predetermined order with respect to each other;
   wherein, a hoop layer is wrapped over the cylindrical portion (106) of the metallic liner (102) of the pressure vessel (100) and a helical layer is wrapped over both the cylindrical portion (106) and the pair of ellipsoidal domes (108-1, 108-2), the helical layer is wrapped on each of the pair of ellipsoidal domes (108-1, 108-2) in a manner that a helical angle is defined at an intersection, between the cylindrical portion (106) and the pair of ellipsoidal domes, **characterized in that** the metallic liner (102) has a varied thickness across each of the pair of ellipsoidal domes (108-1, 108-2), and wherein the thickness of the metallic liner (102) in vicinity of the pair of openings (202-1, 202-2) of the ellipsoidal domes (108-1, 108-2) is four times the thickness of the metallic liner (102) in the cylindrical portion (106).

2. The pressure vessel (100) as claimed in claim 1, wherein the helical angle is in a range of 10° to 45°, wherein the fluid is embodied as one of liquid and gas, wherein the gas is embodied as one of compressed natural gas, hydrogen gas, LPG, and mixture thereof, and wherein the pressure vessel (100) comprises a pair of openings (202-1, 202-2) at the pair of ellipsoidal domes (108-1, 108-2), the cylindrical portion (106) of the pressure vessel (100) is connected to at least one control valve and at least one pressure release device through the pair of openings (202-1, 202-2).

3. The pressure vessel (100) as claimed in claim 1 or 2, wherein the reinforcing fiber is embodied as glass, aramid, carbon, and combination thereof, wherein the polymeric matrix is embodied as one of thermoplastic resin and thermosetting resin, wherein the thermoplastic resin is embodied as one of polyethylene and polyamide, and wherein the thermosetting resin is embodied as one of epoxy, modified epoxy, polyester, and polyvinyl ester.

4. The pressure vessel (100) according to any preceding claim, wherein the metallic liner (102) is positioned at an inner surface of the pressure vessel (100) and manufactured using a process of spin forming, wherein the metallic liner (102) is T6 treated and O-conditioned, and wherein the metallic liner (102) is enclosed by the pair of ellipsoidal domes (108-1, 108-2) connected to the cylindrical portion (106) in between, and wherein the metallic liner has a uniform thickness across the cylindrical portion.

5. The pressure vessel (100) according to any preceding claim, wherein:

   a number of hoop layers is in a range of 10 to 30, more preferably 15 to 26;
   a thickness of the hoop layer is in a range of 0.11 mm to 0.66 mm, more preferably in the range of 0.22 mm to 0.44 mm;
   a number of helical layers is in a range of 25 to 45, more preferably 29 to 40; and
   a thickness of the helical layer is in a range of 0.44 mm to 5 mm, more preferably in the range of 0.47 mm to 2.5 mm.

6. The pressure vessel (100) as claimed in claim 5, wherein the thickness of the helical layer is uniform in the cylindrical portion (106), wherein an equation is derived to determine the thickness of the helical layer in the pair of ellipsoidal domes (108-1, 108-2)

$$H_{dome} = H_{cylinder} \left( \sqrt{ \frac{R_{cylinder}^2 - (R_{opening} + B_\phi)^2}{R_{location}^2 - (R_{opening} + B_\phi)^2} } \right)$$

where, $H_{dome}$ is the layer thickness at a position, $H_{cylinder}$ is layer thickness at the cylindrical region, $R_{cylinder}$ is equator radius, $R_{opening}$ is pole radius, $B_\phi$ is the fiber bandwidth for winding that angle, and $R_{location}$ is the radius at that location.

7. The pressure vessel as claimed in claim 6, wherein the thickness of the helical layer is higher in the pair of ellipsoidal domes compared to the thickness of the helical layer in the cylindrical portion, the thickness of the helical layer is highest in vicinity of trajectory of each of the pair of ellipsoidal domes, up to which it covers the pressure vessel.

8. The pressure vessel (100) according to any preceding claim, wherein a length to diameter ratio of the cylindrical portion (106) is in a range of 2.5 to 3 while each of the pair of ellipsoidal domes (108-1, 108-2) has a radius to height ratio in a range of 1.25 to 1.30.

9. The pressure vessel (100) according to any preceding claim, wherein the helical angle is higher at the intersection between the ellipsoidal domes (108-1, 108-2) and the cylindrical portion (106), wherein the thickness of the metallic liner (102) is less at the intersection between the ellipsoidal domes (108-1, 108-2) and the cylindrical portion (106).

10. The pressure vessel (100) according to any preceding claim, wherein the pressure vessel (100) withstands an internal pressure of the fluid up to 800 bar.

11. A method for manufacturing a pressure vessel (100) for storing fluid, the method comprising:

applying a composite material (104) over a metallic liner (102) of the pressure vessel (100), wherein a hoop layer of the composite material (104) is wrapped with continuous filament winding operation over a cylindrical portion (106) of the metallic liner (102) of the pressure vessel (100) and a helical layer of the composite material (104) is wrapped over both the cylindrical portion (106) and a pair of ellipsoidal domes (108-1, 108-2) of the metallic liner (102) of the pressure vessel (100),
wherein the helical layer is wrapped on each of the pair of ellipsoidal domes (108-1, 108-2) in a manner that a helical angle is defined at an intersection, between the cylindrical portion (106) and the pair of ellipsoidal domes (108-1, 108-2), and
wherein the metallic liner (102) has a varied thickness across each of the pair of ellipsoidal domes (108-1, 108-2), and wherein the thickness of the metallic liner (102) in vicinity of the pair of openings (202-1, 202-2) of the ellipsoidal domes (108-1, 108-2) is four times the thickness of the metallic liner (102) in the cylindrical portion (106); and
curing the composite overwrap in sequential stages:

(i) 24 to 35 hours at a room temperature; and
(ii) 4 to 15 hours at a temperature in a range of 60° to 100°C,

wherein, at both curing stages, the pressure vessel (100) is rotated at a speed in range of 1-2 rpm.

12. The method as claimed in claim 11, wherein:

the helical angle is in a range of 10° to 45°;
a number of hoop layers is in a range of 10 to 30, more preferably 15 to 26;
a thickness of the hoop layer is in a range of 0.11 mm to 0.66 mm, more preferably in the range of 0.22mm to 0.44mm;
a number of helical layers is in a range of 25 to 45, more preferably 29 to 40; and
a thickness of the helical layer is in a range of 0.44 mm to 5 mm, more preferably in the range of 0.47mm to 2.5 mm.

13. The method as claimed in claim 12, wherein the thickness of the helical layer is uniform in the cylindrical portion (106), wherein an equation is derived to determine the thickness of the helical layer in the pair of ellipsoidal domes (108-1, 108-2)

$$H_{dome} = H_{cylinder} \left( \sqrt{\frac{R_{cylinder}^2 - (R_{opening} + B_{\phi})^2}{R_{location}^2 - (R_{opening} + B_{\phi})^2}} \right)$$

where, $H_{dome}$ is the layer thickness at a position, $H_{cylinder}$ is layer thickness at the cylindrical region, $R_{cylinder}$ is equator radius, $R_{opening}$ is pole radius, $B_{\phi}$ is the fiber bandwidth for winding that angle, and $R_{location}$ is the radius at that location.

14. The method as claimed in claim 13, wherein the thickness of the helical layer is higher in the pair of ellipsoidal domes compared to the thickness of the helical layer in the cylindrical portion, the thickness of the helical layer is highest in vicinity of trajectory of each of the pair of ellipsoidal domes, up to which it covers the pressure vessel, wherein the length to diameter ratio of the cylindrical portion (106) is in a range of 2.5 to 3 while each of the pair of ellipsoidal domes (108-1, 108-2) has a radius to height ratio in a range of 1.25 to 1.30, wherein the helical angle is higher at the intersection between the ellipsoidal domes (108-1, 108-2) and the cylindrical portion (106), and wherein the thickness of the metallic liner (102) is less at the intersection between the ellipsoidal domes (108-1, 108-2) and the cylindrical portion (106).

**Patentansprüche**

1. Druckbehälter (100) zum Speichern von Fluid, der Druckbehälter (100) umfassend:

   eine metallische Auskleidung (102), umfassend einen zylindrischen Abschnitt (106) und ein Paar ellipsoider Kuppeln (108-1, 108-2), die an gegenüberliegenden Enden des zylindrischen Abschnitts (106) positioniert sind; und
   ein Verbundmaterial (104), das über den zylindrischen Abschnitt (106) und das Paar ellipsoider Kuppeln (108-1, 108-2) gewickelt ist, wobei das Verbundmaterial (104) aus einer mit Fasern verstärkten Polymermatrix gebildet ist, wobei das Verbundmaterial (104) eine Kombination aus Reifenschichten und schraubenförmigen Schichten umfasst, die in einer vorbestimmten Reihenfolge in Bezug aufeinander angeordnet sind;
   wobei eine Reifenschicht über den zylindrischen Abschnitt (106) der metallischen Auskleidung (102) des Druckbehälters (100) und eine schraubenförmige Schicht sowohl über den zylindrischen Abschnitt (106) als auch über das Paar ellipsoider Kuppeln (108-1, 108-2) gewickelt ist, wobei die schraubenförmige Schicht auf jede des Paars ellipsoider Kuppeln (108-1, 108-2) gewickelt ist, sodass ein schraubenförmiger Winkel an einer Kreuzung zwischen dem zylindrischen Abschnitt (106) und dem Paar ellipsoider Kuppeln definiert ist,
   **dadurch gekennzeichnet, dass** die metallische Auskleidung (102) eine variierende Dicke über jede des Paars ellipsoider Kuppeln (108-1, 108-2) aufweist, und wobei die Dicke der metallischen Auskleidung (102) in der Nähe des Paars Öffnungen (202-1, 202-2) der ellipsoiden Kuppeln (108-1, 108-2) viermal die Dicke der metallischen Auskleidung (102) in dem zylindrischen Abschnitt (106) beträgt.

2. Druckbehälter (100) nach Anspruch 1, wobei der schraubenförmige Winkel in einem Bereich von 10° bis 45° liegt, wobei das Fluid entweder als Flüssigkeit oder als Gas ausgeführt ist, wobei das Gas entweder als komprimiertes Erdgas, Wasserstoffgas, Flüssiggas oder eine Mischung davon ausgeführt ist, und wobei der Druckbehälter (100) ein Paar Öffnungen (202-1, 202-2) an dem Paar ellipsoider Kuppeln (108-1, 108-2) umfasst, wobei der zylindrische Abschnitt (106) des Druckbehälters (100) über das Paar Öffnungen (202-1, 202-2) mit mindestens einem Steuerventil und mindestens einer Druckablassvorrichtung verbunden ist.

3. Druckbehälter (100) nach Anspruch 1 oder 2, wobei die Verstärkungsfaser als Glas, Aramid, Kohlenstoff oder eine Kombination davon ausgeführt ist, wobei die Polymermatrix als thermoplastisches Harz oder wärmehärtendes Harz ausgeführt ist, wobei das thermoplastische Harz als Polyethylen oder Polyamid ausgeführt ist, und wobei das wärmehärtende Harz als Epoxid, modifiziertes Epoxid, Polyester oder Polyvinylester ausgeführt ist.

4. Druckbehälter (100) nach einem der vorstehenden Ansprüche, wobei die metallische Auskleidung (102) an einer inneren Oberfläche des Druckbehälters (100) positioniert ist und unter Verwendung eines Verfahrens zum Schleuderformen hergestellt wird, wobei die metallische Auskleidung (102) T6-behandelt und O-konditioniert ist, und wobei die metallische Auskleidung (102) von dem Paar ellipsoider Kuppeln (108-1, 108-2) umschlossen ist, die mit dem zylindrischen Abschnitt (106) dazwischen verbunden sind, und wobei die metallische Auskleidung eine gleichmäßige Dicke über den zylindrischen Abschnitt aufweist.

5. Druckbehälter (100) nach einem der vorstehenden Ansprüche, wobei:

   eine Anzahl von Reifenschichten in einem Bereich von 10 bis 30, noch bevorzugter 15 bis 26, liegt;
   eine Dicke der Reifenschicht in einem Bereich von 0,11 mm bis 0,66 mm, noch bevorzugter im Bereich von 0,22 mm bis 0,44 mm, liegt;
   eine Anzahl von schraubenförmigen Schichten in einem Bereich von 25 bis 45, noch bevorzugter 29 bis 40, liegt; und
   eine Dicke der schraubenförmigen Schicht in einem Bereich von 0,44 mm bis 5 mm, noch bevorzugter im Bereich von 0,47 mm bis 2,5 mm, liegt.

**6.** Druckbehälter (100) nach Anspruch 5, wobei die Dicke der schraubenförmigen Schicht in dem zylindrischen Abschnitt (106) einheitlich ist, wobei eine Gleichung abgeleitet wird, um die Dicke der schraubenförmigen Schicht in dem Paar von ellipsoiden Kuppeln (108-1, 108-2) zu bestimmen

$$H_{dome} = H_{cylinder} \left( \sqrt{\frac{R_{cylinder}^2 - (R_{opening} + B_\phi)^2}{R_{location}^2 - (R_{opening} + B_\phi)^2}} \right)$$

wobei $H_{dome}$ die Schichtdicke an einer Position, $H_{cylinder}$ die Schichtdicke in der zylindrischen Region, $R_{cylinder}$ der Äquatorradius, $R_{opening}$ der Polradius, $B_\varphi$ die Faserbandbreite zum Wickeln in diesem Winkel und $R_{location}$ der Radius an dieser Stelle ist.

**7.** Druckbehälter nach Anspruch 6, wobei die Dicke der schraubenförmigen Schicht in dem Paar ellipsoider Kuppeln größer ist im Vergleich zu der Dicke der schraubenförmigen Schicht im zylindrischen Abschnitt, wobei die Dicke der schraubenförmigen Schicht in der Nähe der Trajektorie jeder des Paars ellipsoider Kuppeln am größten ist, bis zu der sie den Druckbehälter abdeckt.

**8.** Druckbehälter (100) nach einem der vorstehenden Ansprüche, wobei das Verhältnis von Länge zu Durchmesser des zylindrischen Abschnitts (106) in einem Bereich von 2,5 bis 3 liegt, während jeder des Paars ellipsoider Kuppeln (108-1, 108-2) ein Verhältnis von Radius zu Höhe in einem Bereich von 1,25 bis 1,30 aufweist.

**9.** Druckbehälter (100) nach einem der vorstehenden Ansprüche, wobei der schraubenförmige Winkel an der Kreuzung zwischen den ellipsoiden Kuppeln (108-1, 108-2) und dem zylindrischen Abschnitt (106) größer ist, wobei die Dicke der metallischen Auskleidung (102) an der Kreuzung zwischen den ellipsoiden Kuppeln (108-1, 108-2) und dem zylindrischen Abschnitt (106) kleiner ist.

**10.** Druckbehälter (100) nach einem der vorstehenden Ansprüche, wobei der Druckbehälter (100) einem Innendruck des Fluids von bis zu 800 bar standhält.

**11.** Verfahren zum Herstellen eines Druckbehälters (100) zum Speichern von Fluid, das Verfahren umfassend:

Anwenden eines Verbundmaterials (104) über einer metallischen Auskleidung (102) des Druckbehälters (100), wobei eine Reifenschicht des Verbundmaterials (104) mit kontinuierlichem Filamentwickelvorgang über einen zylindrischen Abschnitt (106) der metallischen Auskleidung (102) des Druckbehälters (100) gewickelt wird und eine schraubenförmige Schicht des Verbundmaterials (104) sowohl über den zylindrischen Abschnitt (106) als auch über ein Paar ellipsoider Kuppeln (108-1, 108-2) der metallischen Auskleidung (102) des Druckbehälters (100) gewickelt wird,
wobei die schraubenförmige Schicht auf jede des Paars ellipsoider Kuppeln (108-1, 108-2) gewickelt ist, sodass ein schraubenförmiger Winkel an einer Kreuzung zwischen dem zylindrischen Abschnitt (106) und dem Paar ellipsoider Kuppeln (108-1, 108-2) definiert ist, und
wobei die metallische Auskleidung (102) eine variierende Dicke über jede des Paars ellipsoider Kuppeln (108-1, 108-2) aufweist, und wobei die Dicke der metallischen Auskleidung (102) in der Nähe des Paars Öffnungen (202-1, 202-2) der ellipsoiden Kuppeln (108-1, 108-2) viermal die Dicke der metallischen Auskleidung (102) in dem zylindrischen Abschnitt (106) beträgt; und
Härten der Verbundstoffumhüllung in nacheinander folgenden Stufen:

(i) 24 bis 35 Stunden bei Raumtemperatur; und
(ii) 4 bis 15 Stunden bei einer Temperatur in einem Bereich von 60° bis 100 °C, wobei der Druckbehälter (100) in beiden Härtungsstufen mit einer Geschwindigkeit im Bereich von 1-2 rpm zu drehen ist.

**12.** Verfahren nach Anspruch 11, wobei:

der schraubenförmige Winkel in einem Bereich von 10° bis 45° liegt;
eine Anzahl von Reifenschichten in einem Bereich von 10 bis 30, noch bevorzugter 15 bis 26, liegt;
eine Dicke der Reifenschicht in einem Bereich von 0,11 mm bis 0,66 mm, noch bevorzugter im Bereich von 0,22 mm bis 0,44 mm, liegt;
eine Anzahl von schraubenförmigen Schichten in einem Bereich von 25 bis 45, noch bevorzugter 29 bis 40, liegt;

---

und

eine Dicke der schraubenförmigen Schicht in einem Bereich von 0,44 mm bis 5 mm, noch bevorzugter im Bereich von 0,47 mm bis 2,5 mm, liegt.

**13.** Verfahren nach Anspruch 12, wobei die Dicke der schraubenförmigen Schicht in dem zylindrischen Abschnitt (106) einheitlich ist, wobei eine Gleichung abgeleitet wird, um die Dicke der schraubenförmigen Schicht in dem Paar von ellipsoiden Kuppeln (108-1, 108-2) zu bestimmen

$$H_{dome} = H_{cylinder}\left(\sqrt{\frac{R_{cylinder}^2-(R_{opening}+B_\phi)^2}{R_{location}^2-(R_{opening}+B_\phi)^2}}\right)$$

wobei $H_{dome}$ die Schichtdicke an einer Position, $H_{cylinder}$ die Schichtdicke in der zylindrischen Region, $R_{cylinder}$ der Äquatorradius, $R_{opening}$ der Polradius, $B_\phi$ die Faserbandbreite zum Wickeln in diesem Winkel und $R_{location}$ der Radius an dieser Stelle ist.

**14.** Verfahren nach Anspruch 13, wobei die Dicke der schraubenförmigen Schicht in dem Paar ellipsoider Kuppeln größer ist im Vergleich zu der Dicke der schraubenförmigen Schicht im zylindrischen Abschnitt, wobei die Dicke der schraubenförmigen Schicht in der Nähe der Trajektorie jeder des Paars ellipsoider Kuppeln am größten ist, bis zu der sie den Druckbehälter abdeckt, wobei das Verhältnis von Länge zu Durchmesser des zylindrischen Abschnitts (106) in einem Bereich von 2,5 bis 3 liegt, während jeder des Paars ellipsoider Kuppeln (108-1, 108-2) ein Verhältnis von Radius zu Höhe in einem Bereich von 1,25 bis 1,30 aufweist, wobei der schraubenförmige Winkel an der Kreuzung zwischen den ellipsoiden Kuppeln (108-1, 108-2) und dem zylindrischen Abschnitt (106) größer ist, und wobei die Dicke der metallischen Auskleidung (102) an der Kreuzung zwischen den ellipsoiden Kuppeln (108-1, 108-2) und dem zylindrischen Abschnitt (106) kleiner ist.

## Revendications

**1.** Récipient sous pression (100) pour stocker un fluide, le récipient sous pression (100) comprenant :

une doublure métallique (102) comprenant une partie cylindrique (106) et une paire de dômes ellipsoïdaux (108-1, 108-2) positionnés aux extrémités opposées de la partie cylindrique (106) ; et

un matériau composite (104) enroulé sur la partie cylindrique (106) et la paire de dômes ellipsoïdaux (108-1, 108-2), dans lequel le matériau composite (104) est formé d'une matrice polymérique renforcée par des fibres, le matériau composite (104) comprend une combinaison de couches de cercle et de couches hélicoïdales qui sont positionnées dans un ordre prédéterminé les unes par rapport aux autres

dans lequel une couche de cercle est enroulée sur la partie cylindrique (106) de la doublure métallique (102) du récipient sous pression (100) et une couche hélicoïdale est enroulée sur la partie cylindrique (106) et la paire de dômes ellipsoïdaux (108-1, 108-2), la couche hélicoïdale est enroulée sur chacun de dômes ellipsoïdaux de la paire (108-1, 108-2) de manière à ce qu'un angle hélicoïdal soit défini à une intersection, entre la partie cylindrique (106) et la paire de dômes ellipsoïdaux,

**caractérisé en ce que**

la doublure métallique (102) présente une épaisseur variable sur chacune des paires de dômes ellipsoïdaux (108-1, 108-2), et dans lequel l'épaisseur de la doublure métallique (102) à proximité de la paire d'ouvertures (202-1, 202-2) de dômes ellipsoïdaux (108-1, 108-2) est quatre fois supérieure à l'épaisseur de la doublure métallique (102) dans la partie cylindrique (106).

**2.** Récipient sous pression (100) selon la revendication 1, dans lequel l'angle hélicoïdal est compris entre 10° et 45°, dans lequel le fluide est constitué d'un liquide ou d'un gaz, dans lequel le gaz est constitué d'un gaz naturel comprimé, d'hydrogène gazeux, de GPL et d'un mélange de ceux-ci, et dans lequel le récipient sous pression (100) comprend une paire d'ouvertures (202-1, 202-2) au niveau de la paire de dômes ellipsoïdaux (108-1, 108-2), la partie cylindrique (106) du récipient sous pression (100) étant reliée à au moins une vanne de régulation et à au moins un dispositif de libération de la pression par l'intermédiaire de la paire d'ouvertures (202-1, 202-2).

**3.** Récipient sous pression (100) selon la revendication 1 ou 2, dans lequel la fibre de renforcement est constituée de verre, d'aramide, de carbone et d'une combinaison de ceux-ci, dans lequel la matrice polymérique est constituée d'une résine thermoplastique et d'une résine thermodurcissable, dans lequel la résine thermoplastique est constituée d'un polyéthylène et d'un polyamide, et dans lequel la résine thermodurcissable est constituée d'un époxy, d'un époxy modifié, d'un polyester et d'un ester polyvinylique.

4. Récipient sous pression (100) selon l'une quelconque des revendications précédentes, dans lequel ladoublure métallique (102) est positionné sur une surface interne du récipient sous pression (100) et fabriqué à l'aide d'un procédé de formage par rotation, dans lequel ladoubluremétallique (102) est traité T6 et O-conditionné, et dans lequel la doublure métallique (102) est entouré par la paire de dômes ellipsoïdaux (108-1, 108-2) reliés à la partie cylindrique (106) entre eux, et dans lequel la doublure métallique a une épaisseur uniforme sur toute la partie cylindrique.

5. Récipient sous pression (100) selon l'une quelconque des revendications précédentes, dans lequel :

   un nombre de couches de cerclage est compris entre 10 et 30, de préférence entre 15 et 26 ;
   une épaisseur de la couche de cerclage est comprise entre 0,11 mm et 0,66 mm, plus préférablement entre 0,22 mm et 0,44 mm ;
   un nombre de couches hélicoïdales est compris entre 25 et 45, de préférence entre 29 et 40 ; et une épaisseur de la couche hélicoïdale est comprise entre 0,44 mm et 5 mm, de préférence entre 0,47 mm et 2,5 mm.

6. Récipient sous pression (100) selon la revendication 5, dans lequel l'épaisseur de la couche hélicoïdale est uniforme dans la partie cylindrique (106), dans lequel une équation est dérivée pour déterminer l'épaisseur de la couche hélicoïdale dans la paire de dômes ellipsoïdaux (108-1, 108-2)

$$H_{dôme} = H_{cylindre} \left( \sqrt{\frac{R_{cylindre}^2 - (R_{ouverture} + B_\phi)^2}{R_{position}^2 - (R_{ouverture} + B_\phi)^2}} \right)$$

où, Hdôme est l'épaisseur de la couche à une position, Hcylindre est l'épaisseur de la couche dans la région cylindrique, Rcylindre est le rayon équatorial, Rouverture est le rayon du pôle, $B_\phi$ est la bande passante de la fibre pour enrouler cet angle, et Rposition est le rayon à cet endroit.

7. Récipient sous pression selon la revendication 6, dans lequel l'épaisseur de la couche hélicoïdale est plus élevée dans la paire de dômes ellipsoïdaux par rapport à l'épaisseur de la couche hélicoïdale dans la partie cylindrique, l'épaisseur de la couche hélicoïdale est la plus élevée dans la proximité de la trajectoire de chacun de dômes ellipsoïdaux de la paire, jusqu'à laquelle elle recouvre le récipient sous pression.

8. Récipient sous pression (100) selon l'une quelconque des revendications précédentes, dans lequel le rapport de longueur sur diamètre de la partie cylindrique (106) est compris entre 2,5 et 3 tandis que chacun de dômes ellipsoïdaux (108-1, 108-2) de la paire présente un rapport de rayon sur la hauteur compris entre 1,25 et 1,30.

9. Récipient sous pression (100) selon l'une quelconque des revendications précédentes, dans lequel l'angle hélicoïdal est plus élevé à l'intersection entre les dômes ellipsoïdaux (108-1, 108-2) et la partie cylindrique (106), dans lequel l'épaisseur de la doublure métallique (102) est moins à l'intersection entre les dômes ellipsoïdaux (108-1, 108-2) et la partie cylindrique (106).

10. Récipient sous pression (100) selon l'une quelconque des revendications précédentes, dans lequel le récipient sous pression (100) résiste à une pression interne du fluide jusqu'à 800 bars.

11. Procédé de fabrication d'un récipient sous pression (100) destiné à stocker un fluide, le procédé comprenant :

   l'application d'un matériau composite (104) sur une doublure métallique (102) du récipient sous pression (100), une couche de cercle du matériau composite (104) étant enroulée par enroulement de filaments continus sur une partie cylindrique (106) de la doublure métallique (102) du récipient sous pression (100) et une couche hélicoïdale du matériau composite (104) étant enroulée sur la partie cylindrique (106) et une paire de dômes ellipsoïdaux (108-1, 108-2) de la doublure métallique (102) du récipient sous pression (100), la couche hélicoïdale étant enroulée sur chacun des dômes ellipsoïdaux de la paire (108-1, 108-2) de manière à ce qu'un angle hélicoïdal soit défini à une intersection, entre la partie cylindrique (106) et la paire de dômes ellipsoïdaux (108-1, 108-2) et

dans lequel ladoublure métallique (102) présente une épaisseur variable sur chacun des dômes ellipsoïdaux de la paire (108-1, 108-2), et dans lequel l'épaisseur de la doublure métallique (102) à proximité de la paire d'ouvertures (202-1, 202-2) des dômes ellipsoïdaux (108-1, 108-2) est quatre fois supérieure à l'épaisseur de ladoublure métallique (102) dans la partie cylindrique (106) ; et

durcir le suremballage composite en étapes successives :

(i) 24 à 35 heures à température ambiante ; et
(ii) 4 à 15 heures à une température comprise entre 60° et 100°C,

dans lequel, aux deux étapes de durcissement, le récipient sous pression (100) est mis en rotation à une vitesse comprise entre 1 et 2 rpm/min.

**12.** Procédé selon la revendication 11, dans lequel :

l'angle hélicoïdal est compris entre 10° et 45° ;
un nombre de couches de cerclage est compris entre 10 et 30, de préférence entre 15 et 26 ;
une épaisseur de la couche de cerclage est comprise entre 0,11 mm et 0,66 mm, plus préférablement entre 0,22 mm et 0,44 mm ;
un nombre de couches hélicoïdales est compris entre 25 et 45, de préférence entre 29 et 40 ; et
une épaisseur de la couche hélicoïdale est comprise entre 0,44 mm et 5 mm, de préférence entre 0,47 mm et 2,5 mm.

**13.** Procédé selon la revendication 12, dans lequel l'épaisseur de la couche hélicoïdale est uniforme dans la partie cylindrique (106), dans lequel une équation est dérivée pour déterminer l'épaisseur de la couche hélicoïdale dans la paire de dômes ellipsoïdaux (108-1, 108-2)

$$H_{dôme} = H_{cylindre} \left( \sqrt{\frac{R_{cylindre}^2 - (R_{,ouverture} + B_\phi)^2}{R_{position}^2 - (R_{,ouverture} + B_\phi)^2}} \right)$$

où, Hdôme est l'épaisseur de la couche à une position, Hcylindre est l'épaisseur de la couche dans la région cylindrique, Rcylindre est le rayon équatorial, Rouverture est le rayon du pôle, $B_\phi$ est la bande passante de la fibre pour enrouler cet angle, et Rposition est le rayon à cet endroit.

**14.** Procédé selon la revendication 13, dans lequel l'épaisseur de la couche hélicoïdale est plus élevée dans la paire de dômes ellipsoïdaux par rapport à l'épaisseur de la couche hélicoïdale dans la partie cylindrique, l'épaisseur de la couche hélicoïdale est plus élevée à proximité de la trajectoire de chacun des dômes ellipsoïdaux de la paire, jusqu'à laquelle elle recouvre le récipient sous pression, dans lequel le rapport de longueur sur le diamètre de la partie cylindrique (106) est dans une plage de 2,5 à 3 tandis que chacun des dômes ellipsoïdaux de la paire (108-1, 108-2) a un rapport de rayon sur la hauteur dans une plage de 1,25 à 1,30, dans lequel l'angle hélicoïdal est plus élevé à l'intersection entre les dômes ellipsoïdaux (108-1, 108-2) et la partie cylindrique (106), et dans lequel l'épaisseur de la doublure métallique (102) est moins à l'intersection entre les dômes ellipsoïdaux (108-1, 108-2) 108-2) et la partie cylindrique (106).

**FIGURE 1c**

**FIGURE 1a**

**FIGURE 1b**

FIGURE 2a

**FIGURE 2b**

| Layer | Angle | Cylinder | 1 | 2 | 3 | 4 | 5 | 6 | 7 | Layer | Angle | Cylinder | 1 | 2 | 3 | 4 | 5 | 6 | 7 |
|---|---|---|---|---|---|---|---|---|---|---|---|---|---|---|---|---|---|---|---|
| 1 | 90 | | | | | | | | | 24 | 10 | | | | | | | | |
| 2 | 10 | | | | | | | | | 25 | 10 | | | (Layer from top to bottom) | | | | | |
| 3 | 15 | | | | | | | | | 26 | 90 | | | | | | | | |
| 4 | 90 | | | | | | | | | 27 | 10 | | | | | | | | |
| 5 | 45 | | | | | | | | | 28 | 10 | | | | | | | | |
| 6 | 15 | | | | | | | | | 29 | 90 | | | | | | | | |
| 7 | 25 | | | | | | | | | 30 | 35 | | | | | | | | |
| 8 | 15 | | | | | | | | | 31 | 45 | | | | | | | | |
| 9 | 90 | | | | | | | | | 32 | 25 | | | | | | | | |
| 10 | 45 | | | | | | | | | 33 | 90 | | | | | | | | |
| 11 | 15 | | | | | | | | | 34 | 45 | | | | | | | | |
| 12 | 90 | | | | | | | | | 35 | 35 | | | | | | | | |
| 13 | 45 | | | | | | | | | 36 | 45 | | | | | | | | |
| 14 | 25 | | | | | | | | | 37 | 90 | | | | | | | | |
| 15 | 90 | | | | | | | | | 38 | 45 | | | | | | | | |
| 16 | 45 | | | | | | | | | 39 | 25 | | | | | | | | |
| 17 | 15 | | | | | | | | | 40 | 45 | | | | | | | | |
| 18 | 90 | | | | | | | | | 41 | 90 | | | | | | | | |
| 19 | 45 | | | | | | | | | 42 | 45 | | | | | | | | |
| 20 | 15 | | | | | | | | | 43 | 35 | | | | | | | | |
| 21 | 10 | | | | | | | | | 44 | 45 | | | | | | | | |
| 22 | 10 | | | | | | | | | 45 | 90 | | | | | | | | |
| 23 | 90 | | | | | | | | | 46 | 90 | | | | | | | | |

**FIGURE 3a**

FIGURE 3b

**FIGURE 4**

500

APPLYING A COMPOSITE MATERIAL OVER A METALLIC LINER OF THE PRESSURE VESSEL, WHEREIN A HOOP LAYER OF THE COMPOSITE MATERIAL IS WRAPPED WITH CONTINUOUS FILAMENT WINDING OPERATION OVER A CYLINDRICAL PORTION OF THE METALLIC LINER OF THE PRESSURE VESSEL AND A HELICAL LAYER OF THE COMPOSITE MATERIAL IS WRAPPED OVER BOTH THE CYLINDRICAL PORTION AND A PAIR OF ELLIPSOIDAL DOMES OF THE METALLIC LINER OF THE PRESSURE VESSEL

502

CURING THE COMPOSITE OVERWRAP IN SEQUENTIAL STAGES:

(I)  24 TO 35 HOURS AT A ROOM TEMPERATURE; AND

(II) (II) 4 TO 15 HOURS AT A TEMPERATURE IN A RANGE OF 60° TO 100°C

WHEREIN, AT BOTH CURING STAGES, THE PRESSURE VESSEL IS ROTATED AT A SPEED IN RANGE OF 1-2 RPM

504

**FIGURE 5**

**FIGURE 6**

**FIGURE 7**

**FIGURE 8**

**EP 4 215 796 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150219277 A1

- US 20200309320 A1